# EUROPÄISCHE PATENTSCHRIFT

(11) **EP 1 118 780 B1**
(45) Veröffentlichungstag und Bekanntmachung des Hinweises auf die Patenterteilung: **29.09.2004**
(21) Anmeldenummer: 00127424.0
(22) Anmeldetag: 14.12.2000
(51) Int. Cl.: F16C 9/02, F16M 1/025

(54) **Maschinengehäuse mit geteilter Lageranordnung aus Material ähnlicher Härte**
Machine casing with a divided bearing assembly of a material of similar hardness
Carter de machine avec un ensemble de palier fendu en un matériau de dureté similaire

(30) Priorität: 18.01.2000 DE 10001781
(43) Veröffentlichungstag der Anmeldung: 25.07.2001
(73) Patentinhaber: Bayerische Motoren Werke Aktiengesellschaft, 80809 München (DE)
(72) Erfinder: Luchner, Clemens, 85598 Baldham (DE); Stothard, Nigel, Dr., 81927 München (DE); Schimmelpfennig, Dierk, 80801 München (DE)

(56) Entgegenhaltungen:
- EP-A- 0 172 309
- EP-A- 0 882 901
- EP-A- 0 939 139
- CH-A- 364 147
- DE-A- 19 819 080
- DE-A- 19 819 081

## Beschreibung

Die Erfindung betrifft ein Maschinengehäuse der im Oberbegriff des Patentanspruchs 1 genannten Art.

Ein Maschinengehäuse mit geteilter Lageranordnung für den Einsatz als Hauptlager für eine Kurbelwelle einer Brennkraftmaschine ist beispielsweise in der gattungsbildenden DE 195 35 497 A1 beschrieben. Die hier benannte Lageranordnung zeichnet sich dadurch aus, dass zumindest eine Spannfläche grob mechanisch, das heisst spanabhebend bearbeitet ist, damit sie über erhabene Bereiche verfügt. Diese erhabenen Bereiche prägen sich bei der ersten Montage der Lageranordnung in die korrespondierende Spannfläche ein und bilden eine formschlüssige Verbindung. Damit dieser Prägevorgang möglich ist, muss das Lagerteil mit der mechanisch bearbeiteten Spannfläche zumindest im Bereich der Spannfläche härter sein als die korrespondierende Spannfläche, die vergleichsweise weich ist. Werden beide Spannflächen aus Material gleicher Härte gefertigt, muss eine der mechanisch bearbeiteten Spannflächen zumindest im Bereich der Erhöhungen oberflächengehärtet werden.

Nachteilig bei der oben genannten Lösung ist die eingeschränkte Materialauswahl, aufgrund der notwendigen Kombination von Materialien unterschiedlicher Härte, zur bestmöglichen Funktionserfüllung des Maschinengehäuses mit geteilter Lageranordnung. Konsequente Leichtbauweise setzt voraus, dass härtbare Leichtmetalle eingesetzt werden müssen.

Der Erfindung liegt die Aufgabe zugrunde, ein Maschinengehäuse mit einer geteilten Lageranordnung aufzuzeigen, dessen Spannflächen formschlüssig verspannbar und aus einem für die Funktion des Maschinengehäuses idealen Werkstoff darstellbar sind.

Erfindungsgemäß ist die Aufgabe durch die Merkmale des Patentanspruch 1 gelöst. Vorteilhaft bei dieser Lösung ist, dass nur die formschlüssigen Bereiche einen Materialauftrag erfahren, während das Maschinengehäuse selbst aus Materialien gefertigt werden kann, welche die bestmögliche Funktion des Maschinengehäuses gewährleisten.

Vorteilhaft nach Anspruch 2 ist der Einsatz von nur einem Material für das Maschinengehäuse, da normalerweise unterschiedliche Härten bereits verschiedene Werkstoffeigenschaften zur Folge haben. Die Verwendung des für die Funktion des Maschinengehäuses am besten geeignete Material ist somit möglich.

Die Größendimensionierung nach Anspruch 4 stellt sicher, dass beim Verspannen der Lageranordnung das aufgetragene Material mit hoher Härte nicht in die weiche Spannfläche gedrückt wird, auf die es aufgetragen ist. Zusätzlich berücksichtigt ist dabei der Effekt einer Materialverfestigung durch die Stauchung der Oberfläche aufgrund der zur Verspannung des Maschinengehäuse aufgebrachten Verspannkraft.

Entsprechend Anspruch 5 ist auch hier die Verwendung des für die Funktion beziehungsweise Gewicht des Maschinengehäuses am besten geeignete, hier ein Material mit hoher Härte, möglich. Dies ist positiv für Maschinengehäuse die, wie zum Beispiel Kurbelgehäuse mit Bedplate aus Aluminium oder Magnesium, größte Steifigkeit erfordern.

Die beigefügten Zeichnungen stellen bevorzugte Ausführungsbeispiele für die Erfindung dar. Es zeigen im einzelnen:
- Fig. 1:: Maschinengehäuse mit geteilter Lageranordnung und Spannfläche mit aufgetragenem, raupenförmigen Bereich höherer Härte als die Spannflächen.
- Fig. 2:: Wie Fig. 1, mit bearbeitetem, aufgetragenen, schneidenförmigen Bereich höherer Härte als die Spannflächen.
- Fig. 3:: Maschinengehäuse mit geteilter Lageranordnung und Spannfläche mit aufgetragenem, raupenförmigen Bereich niedrigerer Härte als die Spannflächen.

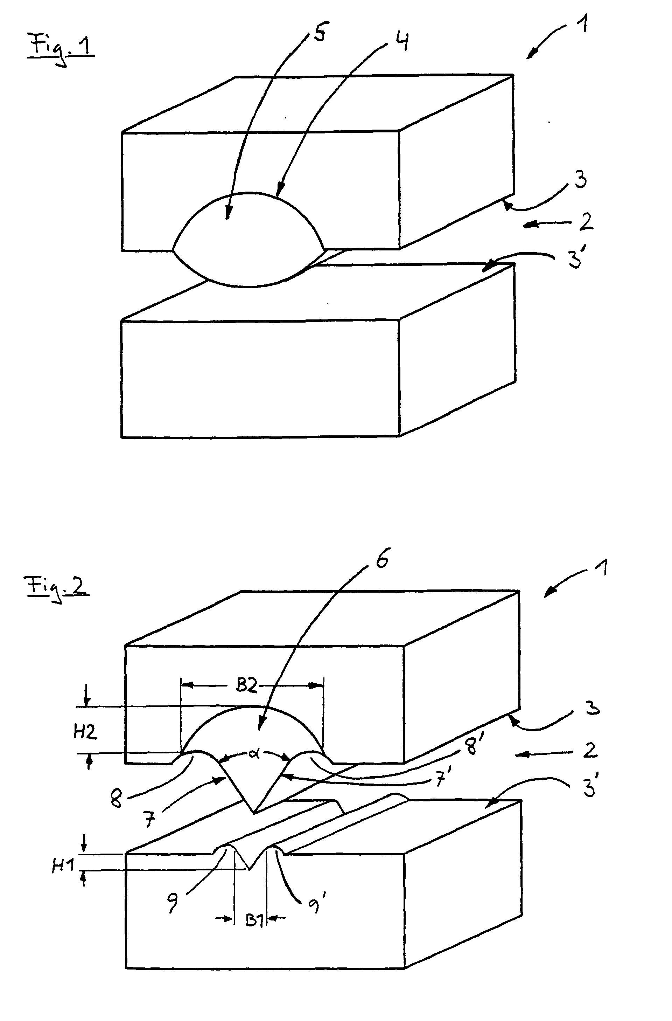

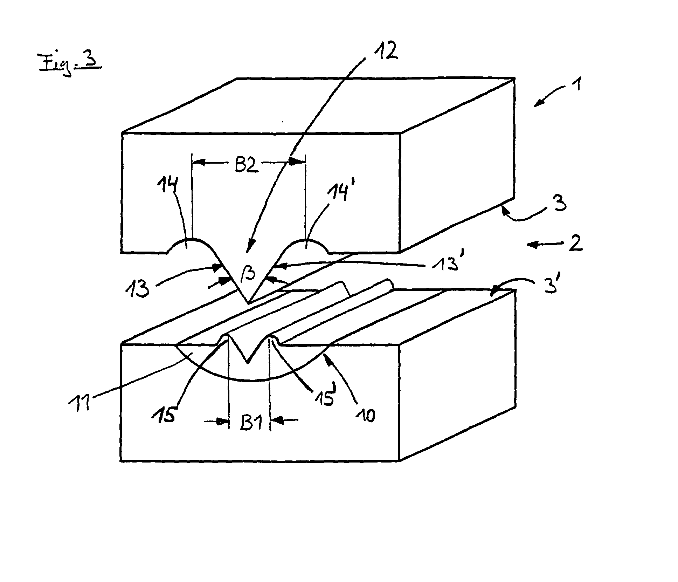

In Fig. 1 ist ein Maschinengehäuse 1 mit einer geteilten Lageranordnung 2 und eine Spannfläche 3 mit einer korrespondierenden Spannfläche 3' dargestellt. Beide Spannflächen 3, 3' weisen geringe Härte auf, sie sind weich. In eine Nut 4 auf der Spannfläche 3 ist beispielsweise mit einem Laserpulverschmelzverfahren ein erhabener, raupenförmiger Bereich 5 mit hoher Härte aufgebracht. Die Nut 4 kann spanend oder spanlos hergestellt sein. Die Bezugszeichen von Fig.1 gelten auch für die Fig. 2.

Wie in Fig. 2 zu erkennen ist, wird der erhabene, raupenförmige Bereich 5 beidseitig durch spanende Bearbeitung, wie beispielsweise Schleifen oder Räumen, zu einem schneidenartigen, erhabenen Auftrag 6 mit einem Spitzenwinkel α zwischen 45° und 90° gefertigt. Bei dieser Bearbeitung werden beidseitig von den Schneidenflanken 7, 7' des schneidenartigen, erhabenen Bereiches 6 die Vertiefungen 8, 8' in die Spannfläche 3 gearbeitet. Diese bilden beim Verspannen der Lageranordnung 2 Hohlräume, in die ein aus der Spannfläche 3' verdrängtes Material 9, 9' fließt. Dadurch ist gewährleistet, dass die Spannflächen 3 und 3' auf Block verspannbar sind.

Die Höhen H1 und H2 des schneidenförmigen, erhabenen Bereichs sind derart dimensioniert, dass die auf die Lageranordnung zu erwartenden Querkräfte aufgenommen werden.

Eine weitere Ausführungsvariante besteht darin, den erhabenen raupenförmigen Bereich mit hoher Härte 5 statt in der Nut 4, direkt auf die plane Oberfläche der Spannfläche 3 aufzubringen. Dafür werden die Vertiefungen 8, 8' entsprechend größer gefertigt, um wiederum das aus der Spannfläche 3' verdrängte Material 9, 9' aufzunehmen.

In Fig. 3 ist ein Maschinengehäuse 1 mit einer geteilten Lageranordnung 2 und eine Spannfläche 3 mit einer korrespondierenden Spannfläche 3' dargestellt. Beide Spannflächen 3, 3' weisen hohe Härte auf, sie sind hart. Auf die Spannfläche 3' ist in eine Nut 10 beispielsweise mit einem Laserpulverschmelzverfahren ein raupenförmiger Bereich 11 mit geringer Härte aufgebracht. Die Nut 10 kann spanend oder spanlos hergestellt sein.

Die Spannfläche 3 ist derart bearbeitet, dass sie über einen erhabenen, schneidenartigen Bereich 12 verfügt mit einem von den Schneidenflanken 13 und 13' gebildeten Spitzenwinkel β, der zwischen 45° und 90° ausgebildet ist. Neben den Schneidenflanken sind Vertiefungen 14, 14' in die Spannfläche 3 gearbeitet.

Beim Verspannen der Lageranordnung 2, dringt der erhabene schneidenartige Bereich 12 in den raupenförmigen Bereich 11 ein und verdrängt Material 15, 15' aus diesem. Die Vertiefungen 14, 14' bilden Hohlräume, in die das verdrängte Material 15, 15' fließt, damit gewährleistet ist, dass die Spannflächen 3 und 3' auf Block verspannbar sind.

Eine weitere Ausführungsvariante besteht darin, den raupenförmigen Bereich 11 mit geringer Härte nicht in einer Vertiefung, sondern direkt auf die plane Oberfläche der Spannfläche 3 aufzubringen. Dafür sind die Vertiefungen 14, 14' entsprechend größer gefertigt, um wiederum das aus dem raupenförmigen Bereich 11 verdrängte Material 15, 15' aufzunehmen.

### Bezugszeichenliste:

- 1: Maschinengehäuse
- 2: Lageranordnung
- 3, 3': Spannfläche
- 4: Nut
- 5: erhabener, raupenförmiger Bereich, hohe Härte
- 6: erhabener, schneidenförmiger Bereich, hohe Härte
- 7, 7': Schneidenflanken
- 8, 8': Vertiefung
- 9, 9': verdrängtes Material, geringe Härte
- 10: Laseraufschmelznut
- 11: raupenförmiger Bereich, geringe Härte
- 12: erhabener, schneidenförmiger Bereich
- 13, 13': Schneidenflanken
- 14, 14': Vertiefung
- 15, 15': verdrängtes Material

## Patentansprüche

1. Maschinengehäuse (1) mit einer geteilten Lageranordnung (2), mit zwei Spannflächen (3; 3') die gegeneinander formschlüssig verspannbar sind, wobei der Formschluß bei erstmaliger Montage durch Einprägung von schneidenförmigen, erhabenen Bereichen auf einer Spannfläche (3) in die korrespondierende Spannfläche (3') durch Materialverdrängung erreichbar ist, **dadurch gekennzeichnet, dass** die Spannfläche (3) und die korrespondierende Spannfläche (3') aus Material ähnlicher Härte aufgebaut und zumindest ein raupenförmiger Bereich anderer Härte (5; 11) mittels Auftragsschweißen auf einer Spannfläche (3; 3') aufgebracht ist.

2. Maschinengehäuse nach Anspruch 1 **dadurch gekennzeichnet, dass** beide Spannflächen (3; 3') aus Material mit gleicher Härte sind.

3. Maschinengehäuse nach Ansprüchen 1 und 2 **dadurch gekennzeichnet, dass** auf eine Spannfläche (3; 3') zumindest ein raupenförmiger, erhabener Bereich (5) höherer Härte als die der Spannfläche (3; 3') aufgebracht ist, aus dem ein erhabener, schneidenförmiger Bereich (6) herausgearbeitet ist.

4. Maschinengehäuse nach Anspruch 3 **dadurch gekennzeichnet, dass** die Grundbreite (B2) des erhabenen, schneidenförmigen Bereichs (6) mindestens eineinhalb mal so breit wie die Eindringbreite (B1) des erhabenen, schneidenförmigen Bereichs (6) in die korrespondierende Spannfläche (3') ist.

5. Maschinengehäuse nach Ansprüchen 1 und 2 **dadurch gekennzeichnet, dass** zumindest ein erhabener, schneidenförmiger Bereich (12) auf einer Spannfläche (3; 3') in einen Bereich geringerer Härte (11) als die der Spannfläche (3; 3'), in die korrespondierende Spannfläche einprägbar ist.

## Claims

1. An engine casing (1) with a divided bearing arrangement (2) comprising two clamping surfaces (3; 3') for positively clamping to one another, wherein the positive engagement after first assembly is obtained by impressing edge-like raised areas on one clamping surface (3) into the corresponding clamping surface (3') by displacement of material, **characterised in that** the clamping surface (3) and the corresponding clamping surface (3') are made of material of similar hardness and at least one bead-like region having a different hardness (5; 11) is applied to one clamping surface (3; 3') by build-up welding.

2. An engine casing according to claim 1, **characterised in that** both clamping surfaces (3; 3') are made of equally hard material.

3. An engine casing according to claims 1 and 2, **characterised in that** at least one clamping surface (3, 3') is formed with a bead-like raised region (5) harder than the clamping surface (3; 3') from which a raised edge-like region (6) is formed.

4. An engine casing according to claim 3, **characterised in that** the base width (B2) of the raised edge-like region (6) is at least one and a half times as great as the width (B1) of penetration of the raised edge-like region (6) into the corresponding clamping surface (3').

5. An engine casing according to claims 1 and 2, **characterised in that** at least one raised edge-like region (12) on one clamping surface (3; 3') is impressible into a region (11) on the corresponding clamping surface having less hardness than the clamping surface (3; 3').

## Revendications

1. Carter de machine (1) comprenant un ensemble de palier (2) divisé avec deux surfaces de serrage (3, 3') qui peuvent être serrées l'une sur l'autre avec verrouillage par combinaison de formes réalisé au premier montage en formant l'empreinte de zones relevées en forme d'arête d'une première surface de serrage (3) dans la surface de serrage (3') correspondante, par refoulement de la matière,
**caractérisé en ce que**
la surface de serrage (3) et la surface de serrage (3') correspondante sont faites de matières de duretés similaires, au moins une zone (5, 11) en forme de chenille et de dureté différente étant réalisée sur une surface de serrage (3, 3') au moyen d'un rechargement par soudure.

2. Carter de machine (1) selon la revendication 1,
**caractérisé en ce que**
les deux surfaces de serrage (3, 3') sont faites de matériaux de mêmes duretés.

3. Carter de machine selon les revendications 1 et 2,
**caractérisé en ce que**
sur une surface de serrage (3, 3') est formée au moins une zone relevée (5) en forme de chenille et de dureté supérieure à celle de la surface de serrage (3, 3') à partir de laquelle est formée une zone (6) relevée en forme d'arête.

4. Carter de machine selon la revendication 3,
**caractérisé en ce que**
la largeur de base (B2) de la zone (6) relevée en forme d'arête est au moins égale à 1,5 fois la largeur d'enfoncement (B1) de la zone (6) relevée en forme d'arête, dans la surface de serrage (3') correspondante.

5. Carter de machine selon les revendications 1 et 2,
**caractérisé en ce que**
sur une surface de serrage (3, 3'), au moins une zone (12) relevée en forme d'arête peut former une empreinte dans une zone (11) dont la dureté est inférieure à celle de la surface de serrage (3, 3'), dans la surface de serrage opposée.
